# EUROPÄISCHE PATENTANMELDUNG

(11) **EP 1 873 414 A2**
(43) Veröffentlichungstag der Anmeldung: **02.01.2008**
(21) Anmeldenummer: 07010766.9
(22) Anmeldetag: 31.05.2007
(51) Int. Cl.: F16D 13/72

(54) **Kraftfahrzeugantriebsstrang**

(30) Priorität: 27.06.2006 DE 102006029374
(71) Anmelder: LuK Lamellen und Kupplungsbau Beteiligungs KG, 77815 Bühl (DE)
(72) Erfinder: Bates, Ian Richard Joseph, CV22 6LG Rugby (GB); Fraser, Leigh, CV22 7DA Bilton Rugby Warwickshire (GB); McLelland, Alan, CV5 9QN Millisons Wood Coventry (GB)

(57) **Zusammenfassung**

Die Erfindung betrifft einen Kraftfahrzeugsantriebsstrang (1) mit einer Kupplungsvorrichtung (3), mittels welcher eine Antriebswelle (5) mit einer Getriebewelle (7) koppelbar ist, wobei die Kupplungsvorrichtung eine Ausnehmung (13) zum Durchführen von Kühlluft aufweist.

Die Erfindung zeichnet sich dadurch aus, dass durch die Ausnehmung ein Zuluftstrom und ein Abluftstrom geführt sind.

## Beschreibung

Die Erfindung betrifft einen Kraftfahrzeugantriebsstrang mit einer Kupplungsvorrichtung, mittels welcher eine Antriebswelle mit einer Getriebewelle koppelbar ist, wobei die Kupplungsvorrichtung eine Ausnehmung zum Durchführen von Kühlluft aufweist.

Zur Übertragung von Drehmomenten in einem Kraftfahrzeugantriebsstrang können mittels zu- und abgeführter Kühlluft temperierte Kupplungsvorrichtungen verwendet werden. Hierzu wird die Kühlluft durch ein Gehäuse, beispielsweise eine Kupplungsglocke, der Kupplungsvorrichtung zu- und abgeführt. Die US 4,629,047 beschreibt eine Methode zum Erzeugen eines Luftstroms innerhalb einer Kupplungsglocke. Die DE 100 49 459 A1, DE 100 49 460 A1, DE 102 15 168 A1, US 4,646,902 und DE 103 38 558 A1 beschreiben ebenfalls Luftströmungen innerhalb einer Kupplungsglocke.

Aufgabe der Erfindung ist es, einen Kraftfahrzeugantriebsstrang mit einer alternativen Kühlluftführung zu schaffen.

Die Aufgabe ist bei einem Kraftfahrzeugantriebsstrang mit einer Kupplungsvorrichtung, mittels welcher eine Antriebswelle mit einer Getriebewelle koppelbar ist, wobei die Kupplungsvorrichtung eine Ausnehmung zum Durchführen von Kühlluft aufweist, dadurch gelöst, dass durch die Ausnehmung ein Zuluftstrom und ein Abluftstrom geführt sind. Vorteilhafterweise weist die Kupplungsvorrichtung, beispielsweise eine Kupplungsglocke der Vorrichtung, nur eine Ausnehmung oder Öffnung auf, durch die gleichermaßen der Zuluft- sowie der Abluftstrom geführt werden können. Es kann also entweder eine zusätzliche Zuluft- oder Abluftöffnung entfallen. Bei der Ausnehmung oder Öffnung handelt es sich im Rahmen der vorliegenden Erfindung um ein Durchgangsloch.

Ein bevorzugtes Ausführungsbeispiel des Kraftfahrzeugantriebsstrangs ist dadurch gekennzeichnet, dass der Zuluftstrom und der Abluftstrom an einer turbulenten Grenzschicht aneinander angrenzen. Mittels der turbulenten Grenzschicht wird eine Vermischung des kühlen Zuluftstrom mit dem heißen Abluftstrom auf ein Minimum reduziert. Es ist also möglich, aufgrund der turbulenten Grenzschicht den Zuluftstrom und den Abluftstrom gegenläufig durch die Ausnehmung hindurchzuführen.

Ein weiteres bevorzugtes Ausführungsbeispiel des Kraftfahrzeugantriebsstrangs ist dadurch gekennzeichnet, dass ein Luftleitelement den Zuluftstrom oder den Abluftstrom formt. Vorteilhaft kann das Luftleitelement beispielsweise als Luftleitblech ausgestaltet werden und den Zuluftstrom und/oder den Abluftstrom so formen, dass diese, beispielsweise mit Hilfe der turbulenten Grenzschicht, aneinander vorbeigeführt werden können.

Ein weiteres bevorzugtes Ausführungsbeispiel des Kraftfahrzeugantriebsstrangs ist dadurch gekennzeichnet, dass das Luftleitelement benachbart zu der Ausnehmung angeordnet ist. Das Luftleitelement kann so geformt und an der Ausnehmung angeordnet sein, dass sich eine Düsenwirkung für den Abluftstrom ergibt, dieser also beschleunigt wird. Durch die Beschleunigung ergibt sich ein vergleichsweise kompakter und gebündelter Luftstrahl, der ohne wesentliche Vermischung mit dem Zuluftstrom durch die Ausnehmung hindurch geblasen werden kann.

Ein weiteres bevorzugtes Ausführungsbeispiel des Kraftfahrzeugantriebsstrangs ist dadurch gekennzeichnet, dass das Luftleitelement benachbart zu einer rotierenden Fläche, insbesondere einer Umfangsfläche, der Kupplungsvorrichtung angeordnet ist. Aufgrund der Reibung des sich in der Kupplungsvorrichtung befindlichen Fluids an der rotierenden Fläche wird dieses Fluid, beispielsweise die umzuwälzende Kühlluft, mitgerissen. Durch die Anordnung des Luftleitbleches benachbart zu der rotierenden Fläche kann dieser mitgerissene und folglich beschleunigte Fluidstrom von der Fläche abgetrennt werden. Der abgetrennte Luftstrom kann beispielsweise mittels des Luftleitblechs zu dem Abluftstrom geformt werden.

Ein weiteres bevorzugtes Ausführungsbeispiel des Kraftfahrzeugantriebsstrangs ist dadurch gekennzeichnet, dass das Luftleitelement den Zuluftstrom und den Abluftstrom voneinander abgrenzt. Mittels des Luftleitelements kann die Abgrenzung des Zuluftstroms von dem Abluftstrom erfolgen, wobei vorteilhaft an einem Ende des Luftleitbleches die Abgrenzung der Luftströmungen mittels der turbulenten Grenzschicht fortgesetzt werden kann.

Ein weiteres bevorzugtes Ausführungsbeispiel des Kraftfahrzeugantriebsstrangs ist dadurch gekennzeichnet, dass das Luftleitblech zumindest teilweise in die Ausnehmung ragt. Mithin ist es möglich, die Abgrenzung im Bereich der Ausnehmung auch mittels des Luftleitelements vorzunehmen. Es ist vorteilhaft, die Abgrenzung der Luftströme mittels der turbulenten Grenzschicht durch diese Maßnahme teilweise oder ganz außerhalb des Gehäuses der Kupplungsvorrichtung vorzunehmen. Mithin ist eine Vermischung des heißen Abluftstroms mit dem kühlen Zuluftstrom auf ein Minimum reduzierbar.

Die oben angegebene Aufgabe ist bei einem Verfahren zur Kühlung einer Kupplungsvorrichtung eines Kraftfahrzeugantriebsstrangs, mittels welcher eine Antriebswelle mit einer Getriebewelle koppelbar ist, wobei die Kupplungsvorrichtung eine Ausnehmung zum Durchführen von Kühlluft aufweist, durch folgenden Schritt gelöst: Führen des Zuluftstroms und des Abluftstroms durch die Ausnehmung. So können der Zuluftstrom und der Abluftstrom durch nur eine Öffnung der Kupplungsvorrichtung, beispielsweise einer Kupplungsglocke der Kupplungsvorrichtung geführt werden. Die Kupplungsglocke benötigt also nur eine Öffnung oder Ausnehmung.

Ein bevorzugtes Ausführungsbeispiel des Verfahrens ist durch folgenden Schritt gekennzeichnet: Führen des Zuluftstrom und des Abluftstrom aneinander angrenzend an einer turbulenten Grenzschicht. Die turbulente Grenzschicht kann eine möglicherweise unerwünschte Vermischung des kühlen Zuluftstrom und des warmen Abluftstrom wirkungsvoll auf ein Minimum reduzieren.

Ein weiteres bevorzugtes Ausführungsbeispiel des Verfahrens ist durch folgenden Schritt gekennzeichnet: Abzweigen des Abluftstroms aus einer von der rotierenden Fläche mitgerissenen Luftschicht mittels des Luftleitelements. Es ist also möglich, die ohnehin im Antriebsstrang vorhandenen Rotationsenergie ohne weitere Vorrichtungen, wie beispielsweise separate Turbinenschaufeln oder ähnliches, für den Antrieb der Kühlluftführung auszunutzen.

Ein weiteres bevorzugtes Ausführungsbeispiel des Verfahrens ist durch folgenden Schritt gekennzeichnet: Abzweigen des Luftstroms als gebündelter, turbulenter und/oder laminarer Luftstrom. Durch die Bündelung des Luftstroms kann der Abluftstrom schneller strömen als der Zuluftstrom und beispielsweise mittels der turbulenten Grenzschicht, besser und gezielter an der gegenläufig strömenden Frischluft vorbeigeführt werden.

Weitere Vorteile, Merkmale und Einzelheiten ergeben sich aus der nachfolgenden Beschreibung, in der unter Bezug auf die Zeichnung ein Ausführungsbeispiel im Einzelnen beschrieben ist. Gleiche, funktionsgleiche und/oder ähnliche Teile sind mit gleichen Bezugszeichen versehen.

Es zeigen:
- Figur 1: eine schematische Seitenansicht einer Kupplungsglocke einer Kupplungsvorrichtung mit einer Ausnehmung;
- Figur 2: eine schematische Innenansicht der in Figur 1 gezeigten Kupplungsglocke;
- Figur 3: eine schematische Schnittansicht einer Ausnehmung analog der Ausnehmung der Kupplungsglocke aus Figur 2 mit einer Klappe;
- Figur 4: eine weitere schematische Schnittansicht einer Ausnehmung analog der Ausnehmung aus Figur 3, jedoch mit einem verlängerten Luftleitelement;
- Figur 5: eine schematische Ansicht eines laminar verlaufenden Zuluftstroms und eines gegenläufig geführten Abluftstroms durch einen Ausnehmung hindurch, und
- Figur 6: eine weitere schematische Darstellung eines laminar geführten Zuluftstroms und eines gegenläufig geführten turbulenten Abluftstroms durch eine Ausnehmung hindurch.

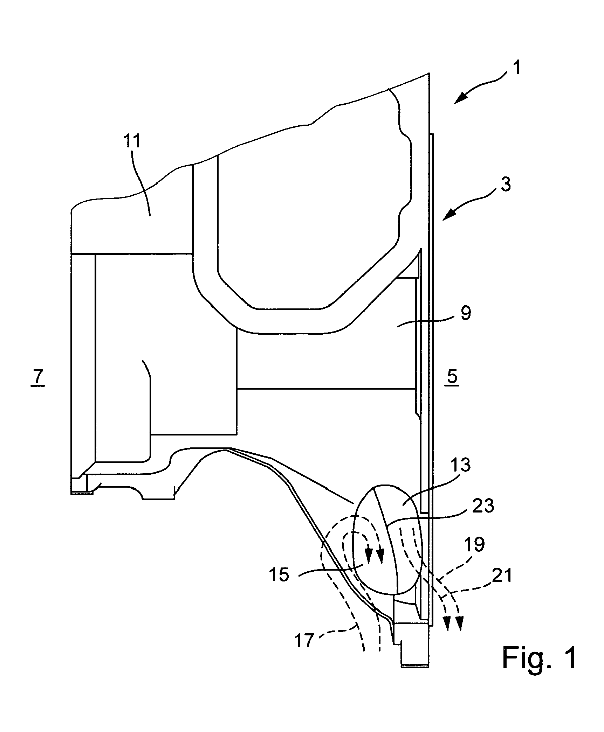

Figur 1 zeigt eine schematische teilweise Seitenansicht eines Kraftfahrzeugantriebsstrangs 1 mit einer Kupplungsvorrichtung 3. Mittels der Kupplungsvorrichtung 3 ist eine Antriebswelle 5, beispielsweise eine Kurbelwelle einer Brennkraftmaschine, mit einer Getriebewelle 7 koppelbar. Die Antriebswelle 5 sowie die Getriebewelle 7 sind lediglich durch die entsprechenden Bezugszeichen angedeutet.

Die Kupplungsvorrichtung 3 weist eine Kupplungsglocke 9 auf, die Teil eines Gehäuses 11 der Kupplungsvorrichtung 3 ist. Das Gehäuse 11 der Kupplungsvorrichtung 3 ist nur teilweise dargestellt und kann weitere Komponenten aufweisen. Das Gehäuse 11 mit der Kupplungsglocke 9 dient zum Umschließen und Schützen von insbesondere drehbeweglich gelagerten Teilen der Kupplungsvorrichtung, beispielsweise einer Trockenkupplung kombiniert mit einem Zweimassenschwungrad. Zur Abführung während des Betriebs der Trockenkupplung entstehender Abwärme, weist die Kupplungsglocke 3 eine Ausnehmung 13 auf. Durch die Ausnehmung oder Öffnung 13 ist ein Zuluftstrom 15 geführt, der mittels gepunkteter geschwungener Pfeile 17 angedeutet ist. Benachbart zu dem Zuluftstrom 15 ist ein Abluftstrom 19 geführt, der mittels geschwungener Pfeile 21 angedeutet ist. Bei der Ausnehmung oder Öffnung 13 handelt es sich im Rahmen der vorliegenden Erfindung um ein Durchgangsloch.

Der Zuluftstrom 15 und/oder der Abluftstrom 19 werden mittels eines Luftleitelements 23 geformt und/oder geführt. Das Luftleitelement 23 kann beispielsweise aus Blech als Luftleitblech ausgebildet sein. Das Luftleitelement 23 ist innerhalb der Kupplungsglocke 9 angeordnet und kann zumindest teilweise in die Ausnehmung 13 hineinragen.

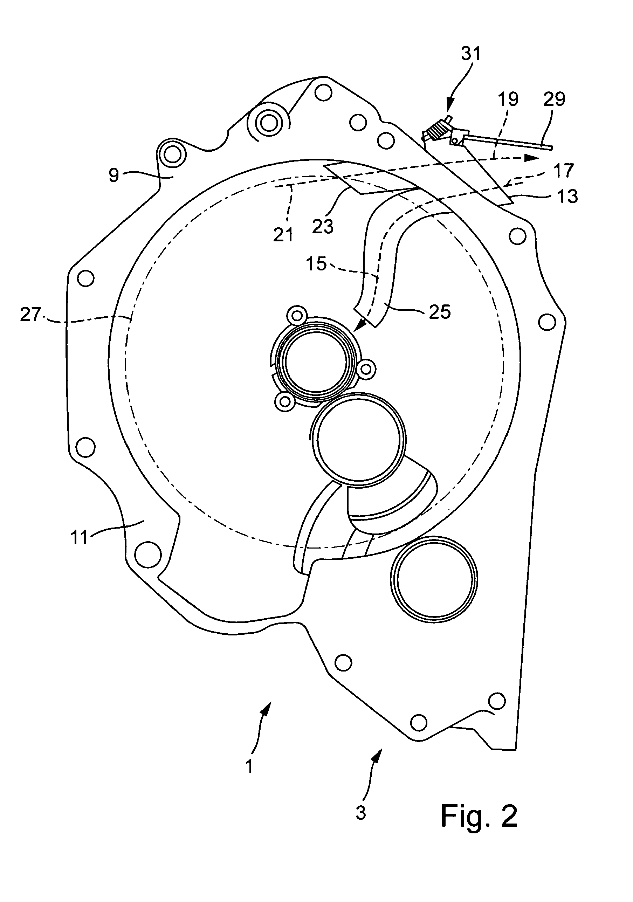

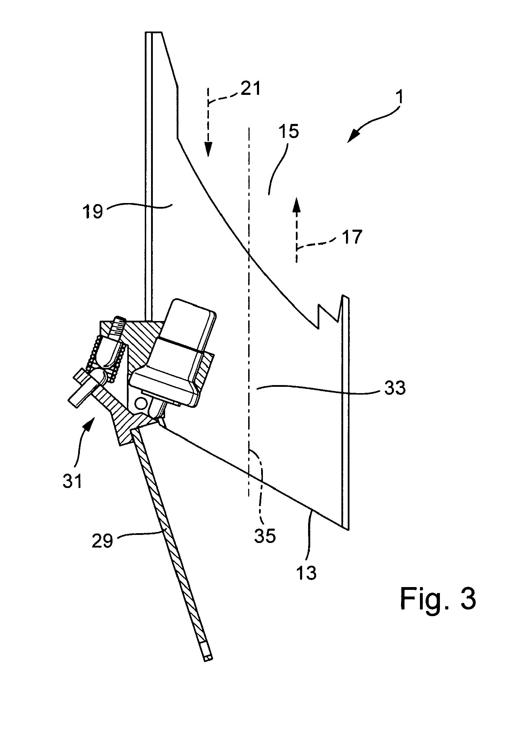

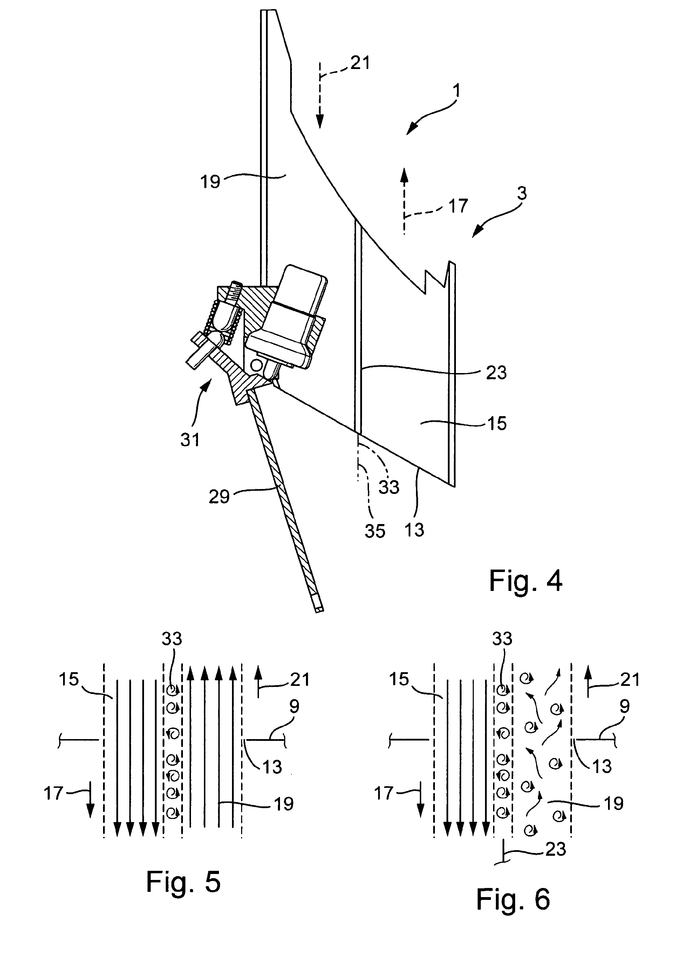

Figur 2 zeigt eine schematische Innenansicht der Kupplungsglocke 9 aus Figur 1. Zu erkennen ist ein Zuluftkanal 25 durch den die Frischluft, also der Zuluftstrom 15 hindurch zur Mitte der Kupplungsvorrichtung 3, beispielsweise in die Nähe eines nicht dargestellten Ausrücklagers der Kupplungsvorrichtung 3. An den Zuluftkanal 25 angrenzend ist das Luftleitelement 23 angeordnet. Das Luftleitelement 23 ist außerdem benachbart zu einer Schwungmasse, beispielsweise eines Zweimassenschwungrades der Kupplungsanordnung 3 angeordnet, die durch einen strichpunktierten Kreis 27 angedeutet ist. Die durch den Kreis 27 angedeutete Schwungmasse weist eine rotierende Oberfläche auf, die mithin daran angrenzende Luft durch die vorhandene Fluidreibung mitreißt. Die mitgerissene Luft kann durch das Luftleitelement 23 in Richtung des Pfeils 21 zu dem Abluftstrom 19 geformt werden und entgegen der Strömungsrichtung des Zuluftstroms 15 durch die Ausnehmung 13, vorzugsweise als gebündelter laminarer und/oder turbulenter Strahl ausgeblasen werden. Die Ausnehmung 13 kann mittels einer Klappe 29 verschlossen werden, die als schematische Schnittansicht in den Figuren 3 und 4 detaillierter dargestellt ist.

Figur 3 zeigt eine schematische Schnittansicht der in Figur 2 sichtbaren Klappe 29 der Kupplungsvorrichtung 3. Zu erkennen ist die Klappe 29 in geöffneter Stellung, die mittels eines thermostatisch betätigten Aktuators 31 temperaturabhängig betätigbar ist. Um Verschmutzungen innerhalb der Kupplungsvorrichtung 3 möglichst gering zu halten, ist es möglich, die Klappe 29 bei niedrigen Temperaturen, also falls keine Kühlluft benötigt wird, mittels des Aktuators 31 zu verschließen beziehungsweise bei höheren Temperaturen, also bei Kühlbedarf, ganz oder teilweise zu öffnen, beispielsweise zumindest in eine Stellung zu bringen, die in den Figuren 3 und 4 erkenntlich ist. Im Unterschied zur Darstellung gemäß Figur 4 ragt in der Ausführungsform gemäß Figur 3 das Luftleitelement 23 nicht in die Ausnehmung 13 hinein. Dennoch ergibt sich der Zuluftstrom 15 und der im Gegenstrom dazu geführte Abluftstrom 19. In diesem Fall wird der Zuluftstrom 15 von dem Abluftstrom 19 durch eine turbulente Grenzschicht 33, die mittels eine strichpunktierten Linie 35 angedeutet ist, voneinander getrennt.

Bei der Darstellung gemäß Figur 4 ragt das Luftleitelement 23 in die Ausnehmung 13 hinein. Das Luftleitelement 23 ragt dabei genau soweit in die Ausnehmung 13 hinein, dass es die Schließbewegung der Klappe 29 gerade nicht behindert, also die Klappe 29 jederzeit vollständig geschlossen werden kann. Es ist zu erkennen, dass das Luftleitelement 23 die Luftströme 15 und 19 voneinander trennt. Im Bereich der Klappe 29 endet das Luftleitelement 29, wobei an dieser Position die turbulente Grenzschicht beginnt, sodass beispielsweise der Abluftstrom 19 weit genug aus der Kupplungsglocke 9 hinaus geblasen werden kann, sodass eine Vermischung von warmer und kalter Luft möglichst gering gehalten wird beziehungsweise auf ein Minimum reduzierbar ist.

Die Figuren 4 und 5 zeigen jeweils schematische Strömungsbilder des Zuluftstroms15 und des im Gegenstrom dazu geführten Abluftstroms 19. Die jeweilige Strömungsrichtung ist durch Strömungspfeile angedeutet, wobei die Hauptströmungsrichtung des Zuluftstroms 15 durch einen Pfeil 17 und die des Abluftstroms 19 durch eine Pfeil 21 angedeutet ist. Ebenfalls schematisch dargestellt ist die Kupplungsglocke 9 mit der Ausnehmung 13. In Figur 5 ist ein Strömungsbild dargestellt, wobei sowohl der Zuluftstrom 15 als auch der Abluftstrom 19 als laminare Strömung im Gegenstrom durch die Ausnehmung 13 hindurchströmen, wobei diese durch die turbulente Grenzschicht 33 voneinander getrennt sind.

In Figur 6 sind der Zuluftstrom 15 und der Abluftstrom 19 ebenfalls durch die turbulente Grenzschicht 33 getrennt. Im Unterschied handelt es sich jedoch bei dem Abluftstrom 19 um einen turbulenten Luftstrom. Als weiterer Unterschied ist das Luftleitelement 23 möglichst nahe an der Ausnehmung 13 angeordnet. Es ist zu erkennen, dass unmittelbar in der Nähe des Luftleitelements 23 sich die turbulente Grenzschicht 33 bildet. Mittels des Luftleitelements 23 ist es möglich, die Luftströme 15 und 19 voneinander getrennt möglichst nahe an die Ausnehmung 13 heranzuführen. Im weitern Verlauf, also vorzugsweise bereits außerhalb der Kupplungsglocke 9 bildet sich dann die turbulente Grenzschicht 33, wodurch zusätzlich auch außerhalb der Kupplungsglocke 9 eine Vermischung der Luftströme 15 und 19 auf ein Minimum reduzierbar ist.

In Figur 6 ist angedeutet, dass der Zuluftstrom 15 aus der Umgebung gekrümmt angesaugt wird, sodass die Verwirbelungszone des Abluftstroms 19 mit der Umgebungsluft möglichst weit außerhalb der Ansaugzone des Zuluftstroms 15 liegt. Vorteilhaft kann dazu auch der Abluftstrom 19 möglichst kompakt mit einer möglichst großen Strömungsgeschwindigkeit ausgeblasen werden.

Es ist vorteilhaft, die Ausnehmung 13 möglichst nahe an einer Schwungmasse der Kupplungsvorrichtung 3, bevorzugt an einem äußeren Durchmesser der Schwungmasse anzuordnen. Vorteilhaft ist am äußersten Durchmesser der Schwungmasse die Geschwindigkeit, also der Mitnahmeeffekt durch die Luftreibung, die zum Antrieb des Abluftstroms 19 ausgenutzt wird am größten. Der Zuluftstrom 15 wird durch einen entsprechend entstehenden Unterdruck innerhalb der Kupplungsvorrichtung 3 einfach eingesaugt. Außerdem ist es vorteilhaft, die Ausnehmung 13 mittels des Luftleitelements 23 in einen Auslasskanal und einen Einfasskanal zu unterteilen. Die Querschnittsfläche der Ausnehmung 13 kann beispielsweise 4000 mm² betragen.

Der Zuluftkanal 25 ist derart gestaltet, dass die eingelassene beziehungsweise eingesaugte Luft in Richtung Mitte der Kupplungsvorrichtung geleitet wird. Demgegenüber kann der durch das Luftleitelement 23 gebildete Auslasskanal kürzer und möglichst nahe an der rotierenden Masse beziehungsweise möglichst nahe am äußersten Radius der rotierenden Masse angeordnet sein. Hierdurch kann die Flussrate des Abluftstroms 19 maximiert werden, insbesondere falls das Luftleitelement 23 tangential an der Schwungmasse und/oder anderen sich drehenden Komponenten der Kupplungsvorrichtung angeordnet ist. Dabei ist das Luftleitelement 23 so angeordnet, dass es einen möglichst großen Luftstrom durch die Ausnehmung 13 in das Äußere des Gehäuses 11 beziehungsweise der Kupplungsglocke 9 befördert. Dabei ist es möglich, eine Art Düsenwirkung zu erzielen, sodass der Zuluftstrom 15 und der Abluftstrom 19 unmittelbar benachbart zueinander verlaufen, möglicherweise sogar der Zuluftstrom 15 den Abluftstrom 19 umgibt, also die Abluft durch den Zuluftstrom 15 hindurch ausgeblasen wird. Durch die erzielte Düsenwirkung kann eine Vermischung des warmen und kalten Luftstroms minimiert werden.

Vorteilhafterweise kann der Aktuator 31 der Klappe 29 möglichst dicht und/oder innerhalb des heißen Abluftstroms 19 angeordnet werden, um so eine optimale, also kürzere Ansprechzeit der thermostatischen Regelung des Aktuators 31 zu ermöglichen. Der Aktuator 31 kann ein bekanntes Wachselement oder ein beliebiges anderes Thermoelement, beispielsweise ein Bimetall aufweisen, wobei sich das Wachs im Falle höhere Temperaturen ausdehnt und einen Verstellstift ausdrückt, so dass sich die Klappe 29 öffnet. Hierzu kann der Aktuator 31 eine Rückstellfeder aufweisen, gegen deren Kraft der Stift ausgedrückt wird, sodass sich die Klappe bei kühleren Temperaturen, also bei sich zusammenziehendem Wachs automatisch wieder schließt. Der Aktuator bildet einen Wachsthermostat zum temperaturabhängigen Öffnen und Schließen der Klappe 29. Die Klappe 29 und der Aktuator 31 bilden ein Niederdruckventil. Die Klappe 29 öffnet zur Außenseite des Gehäuses 11 der Kupplungsvorrichtung 3. Um ein optimales Ansprechverhalten des Wachselements zu gewährleisten, kann dies ein wenig Wärme leitendes Material aufweist, beispielsweise Plastik, und nahe des Schwungrades der Kupplungsvorrichtung 3 angebracht sein, jedoch möglichst außerhalb des Abluftstroms 19.

Es ist vorteilhaft, dass die Oberfläche der Schwungmasse der Kupplungsvorrichtung 3 eine Struktur aufweist, beispielsweise eine gewisse grobe Oberflächenrauheit oder Luftleitschaufeln, um den Abluftstrom 19 besser anzutreiben und die Luftreibung zu erhöhen somit die Strömungsgeschwindigkeit und das Fördervolumen der Abluftstroms 19 zu optimieren. Es ist des Weiteren vorteilhaft, das Luftleitelement 23 als separates Teil oder als angeformtes Teil, beispielsweise als an die Kupplungsglocke 9 integral angeformtes Teil auszuführen. Ferner ist es vorteilhaft, das Luftleitelement 23 fest mit der Klappe 29 zu verbinden, so dass das Luftleitelement 23 ebenfalls eine Stellbewegung ausführt, beispielsweise bei geöffneter Klappe 23 sich in optimaler Position zu der sich drehenden Masse der Kupplungsvorrichtung 3 befindet. Schließlich ist es vorteilhaft, die Ausnehmung 13 nicht in der Kupplungsglocke 9 sondern in einem beliebigen anderen Bauteil der Kupplungsvorrichtung beziehungsweise dem Gehäuse 11 der Kupplungsvorrichtung 3 vorzusehen.

### Bezugszeichenliste

- 1.: Kraftfahrzeugsantriebsstrang
- 3.: Kupplungsvorrichtung
- 5.: Antriebswelle
- 7.: Getriebewelle
- 9.: Kupplungsglocke
- 11.: Gehäuse
- 13.: Ausnehmung
- 15.: Zuluftstrom
- 17.: Pfeil
- 20.: Abluftstrom
- 21.: Pfeil
- 23.: Luftleitelement
- 25.: Zuluftkanal
- 27.: Kreis
- 29.: Klappe
- 31.: Aktuator
- 33.: turbulente Grenzschicht
- 35.: Linie

## Patentansprüche

1. Kraftfahrzeugsantriebsstrang (1) mit einer Kupplungsvorrichtung (3), mittels welcher eine Antriebswelle (5) mit einer Getriebewelle (7) koppelbar ist, wobei die Kupplungsvorrichtung (3) eine Ausnehmung (13) zum Durchführen von Kühlluft aufweist, **dadurch gekennzeichnet, dass** durch die Ausnehmung (13) ein Zuluftstrom (15) und ein Abluftstrom (19) geführt sind.

2. Kraftfahrzeugsantriebsstrang nach dem vorhergehenden Anspruch, **dadurch gekennzeichnet, dass** der Zuluftstrom (15) und der Abluftstrom (19) an einer turbulenten Grenzschicht (33) aneinander angrenzen.

3. Kraftfahrzeugsantriebsstrang nach einem der vorhergehenden Ansprüche, **dadurch gekennzeichnet, dass** ein Luftleitelement (23) den Zuluftstrom (15) und/oder den Abluftstrom (19) formt.

4. Kraftfahrzeugsantriebsstrang nach dem vorhergehenden Anspruch, **dadurch gekennzeichnet, dass** das Luftleitelement (23) benachbart zu der Ausnehmung (13) angeordnet ist.

5. Kraftfahrzeugsantriebsstrang nach einem der Ansprüche 3 oder 4, **dadurch gekennzeichnet, dass** das Luftleitelement (23) benachbart zu einer rotierenden Fläche, insbesondere einer Umfangsfläche, der Kupplungsvorrichtung (3) angeordnet ist.

6. Kraftfahrzeugsantriebsstrang nach einem der Ansprüche 3 bis 5, **dadurch gekennzeichnet, dass** das Luftleitelement (23) den Zuluftstrom (15) und den Abluftstrom (19) voneinander abgrenzt.

7. Kraftfahrzeugsantriebsstrang nach einem der Ansprüche 3 bis 6, **dadurch gekennzeichnet, dass** das Luftleitelement (23) zumindest teilweise in die Ausnehmung (13) ragt.

8. Verfahren zur Kühlung einer Kupplungsvorrichtung (3) eines Kraftfahrzeugsantriebsstrangs, insbesondere eines Kraftfahrzeugsantriebsstrangs (1) nach einem der vorhergehenden Ansprüche, mittels welcher eine Antriebswelle (5) mit einer Getriebewelle (7) koppelbar ist, wobei die Kupplungsvorrichtung (3) eine Ausnehmung (13) zum Durchführen von Kühlluft aufweist, **gekennzeichnet durch** folgenden Schritt:
- Führen des Zuluftstroms (15) und des Abluftstroms (19) **durch** die Ausnehmung (13).

9. Verfahren nach dem vorhergehenden Anspruch,
**gekennzeichnet durch** folgenden Schritt:
- Führen des Zuluftstroms (15) und des Abluftstroms (19) aneinander angrenzend an einer turbulenten Grenzschicht (33).

10. Verfahren nach einem der Ansprüche 8 oder 9, **gekennzeichnet durch** folgenden Schritt:
- Abzweigen des Abluftstroms (19) aus einer von der rotierenden Fläche mitgerissenen Luftschicht mittels des Luftleitelements (23).

11. Verfahren nach einem der Ansprüche 8 bis 10, **gekennzeichnet durch** folgenden Schritt:
- Formen des Abluftstroms (19) als gebündelter, turbulenter und/oder laminarer Luftstrom.
